(19) Europäisches Patentamt
European Patent Office
Office européen des brevets

(11) **EP 4 209 935 A1**

(12) **EUROPEAN PATENT APPLICATION**

(43) Date of publication:
**12.07.2023 Bulletin 2023/28**

(21) Application number: **22192465.7**

(22) Date of filing: **26.08.2022**

(51) International Patent Classification (IPC):
**G06F 17/16** $^{(2006.01)}$

(52) Cooperative Patent Classification (CPC):
**G06F 17/11;** G06F 30/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.01.2022 JP 2022000406**

(71) Applicant: **Kabushiki Kaisha Toshiba**
**Minato-ku**
**Tokyo (JP)**

(72) Inventor: **GOTO, Hayata**
**Tokyo (JP)**

(74) Representative: **Marks & Clerk LLP**
**15 Fetter Lane**
**London EC4A 1BW (GB)**

(54) **CALCULATING DEVICE, CALCULATION PROGRAM, AND CALCULATION METHOD**

(57) According to one embodiment, a calculating device includes a processor configured to perform repeating an update processing. The update processing includes update of first and second variable sets. The first variable set includes a first variable $x_i$. The second variable set includes a second variable $y_i$. The update of the second variable set includes updating the second variable $y_i$ by adding a second function $F_i$ to the second variable $y_i$ before the update. The second function $F_i$ includes the first variable $x_i$ as a variable. The second function $F_i$ includes a parameter $a_i$. An ordinal number $p$ is one integer not less than 1 and not more than N. An ordinal number $q$ is one integer not less than 1 and not more than N. The ordinal number $q$ is different from the ordinal number p. A parameter $a_p$ is different from a parameter $a_q$.

FIG. 1

EP 4 209 935 A1

**Description**

FIELD

Embodiments described herein relate generally to a calculating device, a calculation program, and a calculation method.

BACKGROUND

An optimization problem or the like is solved by a calculating device. It is desirable to increase the calculation accuracy of the calculating device.

BRIEF DESCRIPTION OF THE DRAWINGS

FIG. 1 is a schematic view illustrating a calculating device according to an embodiment;
FIG. 2 is a flowchart illustrating an operation of the calculating device according to the embodiment;
FIG. 3 is a flowchart illustrating an operation of the calculating device according to the embodiment;
FIG. 4 is a schematic view illustrating a part of the calculating device according to the embodiment;
FIG. 5 is a schematic view illustrating a part of the calculating device according to the embodiment;
FIG. 6 is a schematic view illustrating a part of the calculating device according to the embodiment;
FIG. 7 is a flowchart illustrating an operation of the calculating device according to the embodiment;
FIG. 8 is a flowchart illustrating an operation of the calculating device according to the embodiment;
FIG. 9 is a flowchart illustrating an operation of the calculating device according to the embodiment;
FIG. 10 is a flowchart illustrating an operation of the calculating device according to the embodiment;
FIG. 11 is a graph illustrating calculation results of calculating devices; and
FIG. 12 is a graph illustrating calculation results of the calculating devices.

DETAILED DESCRIPTION

According to one embodiment, a calculating device includes a processor configured to perform repeating an update processing. The update processing includes an update of a first variable set and an update of a second variable set. The first variable set includes a first variable $x_i$ (the ordinal number $i$ is an integer of 1 to N, and N is one integer not less than 2). The second variable set includes a second variable $y_i$. The update of the second variable set includes updating the second variable $y_i$ by adding a second function $F_i$ to the second variable $y_i$ before the update. The second function $F_i$ includes the first variable $x_i$ as a variable. The second function $F_i$ includes a parameter $a_i$. An ordinal number p is one integer not less than 1 and not more than N. An ordinal number q is one integer not less than 1 and not more than N. The ordinal number q is different from the ordinal number p. A parameter $a_p$ is different from a parameter $a_q$.

Various embodiments are described below with reference to the accompanying drawings.

In the specification and drawings, components similar to those described previously or illustrated in an antecedent drawing are marked with like reference numerals, and a detailed description is omitted as appropriate.

First embodiment

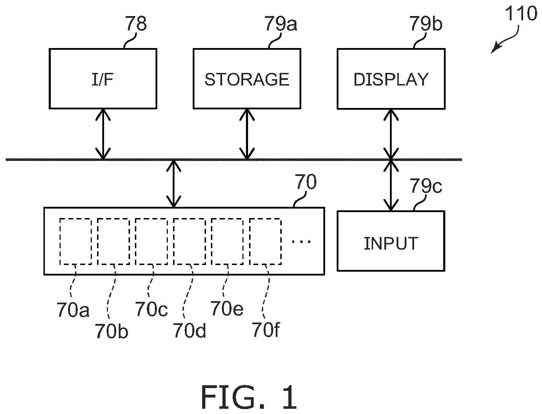

FIG. 1 is a schematic view illustrating a calculating device according to an embodiment.

As shown in FIG. 1, the calculating device 110 according to the embodiment includes a processor 70. As described below, the processor 70 is configured to repeatedly perform an update processing.

The processor 70 may include, for example, a CPU (Central Processing Unit), etc. The processor 70 includes, for example, an electronic circuit, etc. The calculating device 110 may be a calculation system.

In the example, the calculating device 110 includes an acquisition part 78. For example, the acquisition part 78 is configured to acquire various data. The acquisition part 78 includes, for example, an I/O port, etc. The acquisition part 78 is an interface. The acquisition part 78 may include the function of an output part. The acquisition part 78 may include, for example, a communication function.

In the example, the calculating device 110 includes storage 79a. The storage 79a is configured to store various data. The storage 79a may be, for example, memory. The storage 79a may include at least one of ROM (Read Only Memory) or RAM (Random Access Memory).

The calculating device 110 may include a display part 79b, an input part 79c, etc. The display part 79b may include various displays. The input part 79c includes, for example, a device (e.g., a keyboard, a mouse, a touch input panel, a speech recognition input device, etc.) that includes an operation function.

Multiple components that are included in the calculating device 110 can communicate with each other by at least one of wired or wireless methods. The locations at which the multiple components included in the calculating device 110 are located may be different from each other. For example, a general-purpose computer may be used as the calculating device 110. For example, multiple computers that are connected to each other may be used as the calculating device 110. A dedicated circuit may be used as at least a part of the calculating device 110 (e.g., the processor 70, etc.). For example, multiple circuits that are connected to each other may be used as the calculating device 110.

As shown in FIG. 1, the processor 70 may include multiple processing parts (e.g., first to sixth processing parts 70a to 70f, etc.). The multiple processing parts may operate in parallel. For example, parallel processing (parallel computation) may be performed.

Examples of operations performed by the calculating device 110 according to the embodiment will now be described.

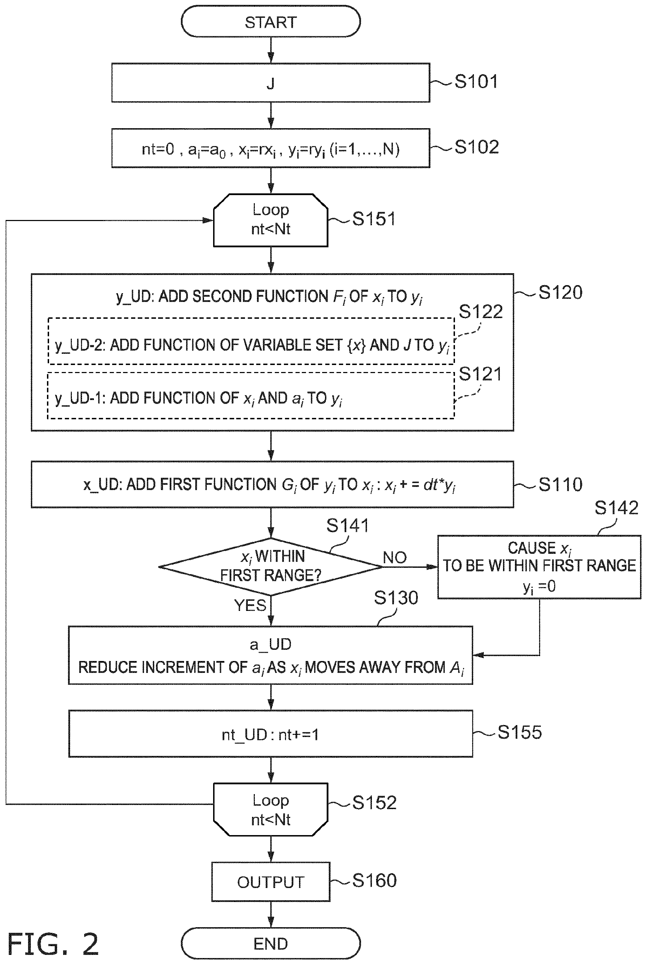

FIG. 2 is a flowchart illustrating an operation of the calculating device according to the embodiment.

FIG. 2 illustrates an operation performed by the processor 70. The processor 70 is configured to repeatedly perform an update processing. The update processing is repeatedly performed by the loop of steps S151 and S152.

The update processing includes an update x_UD of a first variable set (step S110) and an update y_UD of a second variable set (step S120). In the example, step S110 is performed after step S120 in one update processing.

The first variable set includes a first variable $x_i$. The ordinal number $i$ is an integer of 1 to $N$. "$N$" is one integer not less than 2. The first variable $x_i$ corresponds to the $i$th element of the first variable set $\{x\}$. The second variable set includes a second variable $y_i$. The second variable $y_i$, corresponds to the $i$th element of the second variable set $\{y\}$.

The update y_UD of the second variable set (step S120) includes updating the second variable $y_i$, by adding a second function $F_i$ to the second variable $y_i$, before the update. The second function $F_i$ includes the first variable $x_i$ as a variable. For example, the second function $F_i$ is a function of the first variable $x_i$. The second function $F_i$ includes a parameter $a_i$.

The second function $F_i$ may include a first-term function and a second-term function. For example, the second function $F_i$ includes the sum of the first-term function and the second-term function. The update y_UD of the second variable set includes an update y_UD-1 based on the first-term function and an update y_UD-2 based on the second-term function.

The first-term function includes the first variable $x_i$ and the parameter $a_i$ as variables. In other words, the first-term function is a function that includes the first variable $x_i$ and the parameter $a_i$. The update y_UD-1 based on the first-term function includes, for example, adding the first-term function including the first variable $x_i$ and the parameter $a_i$ to the second variable $y_i$, before the update (step S121).

The second-term function includes the first variable set $\{x\}$ and a first parameter set $\{J\}$ as variables. In other words, the update y_UD-2 based on the second-term function includes, for example, adding the second-term function of the first variable set $\{x\}$ and the first parameter set $\{J\}$ to the second variable $y_i$, before the update (step S122). Step S121 may be performed after step S122. Step S122 may be performed after step S121.

On the other hand, the update x_UD of the first variable set (step S110) includes updating the first variable $x_i$ by adding a first function $G_i$ to the first variable $x_i$ before the update. The first function $G_i$ includes the second variable $y_i$ as a variable. For example, the update x_UD of the first variable set (step S110) includes adding the first function $G_i$ of the second variable $y_i$ to the first variable $x_i$ before the update.

As described above, the second function $F_i$ that is used in the update y_UD of the second variable set includes the parameter $a_i$. The parameter $a_i$ is, for example, a bifurcation parameter. According to the embodiment, the parameter $a_i$ for one ordinal number $i$ is different from the parameter $a_i$ for another ordinal number $i$. For example, the ordinal number p is one integer not less than 1 and not more than N. The ordinal number q is one integer not less than 1 and not more than N. The ordinal number q is different from the ordinal number p. According to the embodiment, the parameter $a_p$ is different from the parameter $a_q$. For example, a highly-accurate calculation result is obtained by such a parameter $a_i$.

In a reference example, the same parameter $a_i$ is applied to all in ordinal number $i$. For example, in the reference example, the same parameter $a_i$ is applied to each loop of the update processing.

In contrast, according to the embodiment, different parameters $a_i$ of at least two different ordinal numbers $i$ are applied. A highly-accurate calculation result is obtained thereby.

According to the embodiment, different parameters $a_i$ are applicable to each loop of the update processing. For example, each loop of the update processing includes a first update and a second update. The second update is performed after the first update. The parameter $a_i$ of the second update may be different from the parameter $a_i$ of the first update. The parameter $a_p$ of the second update may be different from the parameter $a_p$ of the first update. The parameter $a_q$ of the second update may be different from the parameter $a_q$ of the first update. For example, according to the embodiment, the parameter $a_i$ is updated. A calculation result of even higher accuracy is obtained thereby.

Several examples related to the update (the modification) of the parameter $a_i$ will now be described.

In the first example, when referenced to the initial parameter $a_i$, the parameter $a_i$ is increased after the loop of the update processing (at the end of the calculation). For example, the processor 70 performs the update processing K times. "K" is an integer not less than 2. The parameter $a_i$ of the Kth update processing is greater than the parameter $a_i$ of the first update processing. In such a case, the increment of the parameter $a_i$ of the second update referenced to the parameter $a_i$ of the first update is set to decrease as the absolute value of the difference between the first variable $x_i$ and a first value $A_i$ increases.

In the first example, for example, the absolute value of the difference between the first variable $x_p$ and the first value $A_p$ is greater than the absolute value of the difference between the first variable $x_q$ and the first value $A_q$. In such a case, the increment of the parameter $a_p$ of the second update referenced to the parameter $a_p$ of the first update is set to be less than the increment of the parameter $a_q$ of the second update referenced to the parameter $a_q$ of the first update. Such processing is performed by the processor 70.

In a second example, when referenced to the initial parameter $a_i$, the parameter $a_i$ is reduced after the loop of the update processing (at the end of the calculation). The parameter $a_i$ of the Kth update processing is less than the parameter $a_i$ of the first update processing. In such a case, the decrement of the parameter $a_i$ of the second update referenced to the parameter $a_i$ of the first update decreases as the absolute value of the difference between the first variable $x_i$ and the first value $A_i$ increases.

In the second example, for example, the absolute value of the difference between the first variable $x_p$ and the first value $A_p$ is greater than the absolute value of the difference between the first variable $x_q$ and the first value $A_q$. In such a case, the decrement of the parameter $a_p$ of the second update referenced to the parameter $a_p$ of the first update is set to be less than the decrement of the parameter $a_q$ of the second update referenced to the parameter $a_q$ of the first update. Such processing is performed by the processor 70.

Thus, the parameter $a_i$ is modified according to the first variable $x_i$. For example, the processor 70 controls the first variable $x_i$ to be within a first range. The first range is not less than a first boundary value and not more than a second boundary value. The first value $A_i$, the first value $A_p$, and the first value $A_q$ described above are not more than the second boundary value of not less than the first boundary value. The first boundary value and the second boundary value correspond to the "walls" of the first range in which the first variable $x_i$ is controlled.

For example, the first value $A_i$ may be a substantially median value of the first and second boundary values. The first value $A_p$ and the first value $A_q$ may be substantially median values of the first and second boundary values.

FIG. 2 shows the first example described above. As shown in FIG. 2, it is determined whether or not the first variable $x_i$ is within the first range after steps S120 and S110 (step S141). When the first variable $x_i$ is within the first range, the flow proceeds to step S130.

When the first variable $x_i$ is not within the first range, the flow proceeds to step S142. Processing is performed in step S142 to cause the first variable $x_i$ to be within the first range. The first variable $x_i$ is returned to the first range. In step S142, for example, the second variable $y_i$, is set to 0. Then, the flow proceeds to step S130.

An update a_UD of the parameter $a_i$ is performed in step S130. In the first example, when referenced to the initial parameter $a_i$, the parameter $a_i$ is increased after the loop of the update processing (at the end of the calculation). In the update a_UD of the parameter $a_i$ of the first example, the increment of the parameter $a_i$ is set to decrease as the first variable $x_i$ moves away from the first value $A_i$.

As shown in FIG. 2, the update processing that includes the update x_UD of the first variable set (step S110), the update y_UD of the second variable set (step S120), and the update a_UD of the parameter $a_i$ are repeated inside a loop. For example, step S110, step S120, and step S130 are located between steps S151 and S152. In the example, steps S141 and S142 are located between steps S151 and S152.

As shown in FIG. 2, for example, the processor 70 acquires the problem data J (step S101). For example, the problem data J is input by a user of the calculating device 110. The acquisition part 78 acquires the problem data J that is input. The problem data J that is acquired by the acquisition part 78 is supplied to the processor 70. For example, the problem data J corresponds to the first parameter set {J}.

As shown in FIG. 2, the following initialization (step S102) is performed. For example, the variables and the parameters are initialized. For example, an iteration count $nt$ is set to 0. For example, the parameter $a_i$ is set to "$a_0$". "$a_0$" is a determined value. For example, the first variable $x_i$ is set to "$rx_i$". The second variable $y_i$, is set to "$ry_i$" in the initialization. "$rx_i$" and "$ry_i$" are mutually-independent random numbers.

Thereafter, the operation of the loop between steps S151 and S152 is performed until the iteration count $nt$ reaches a determined value $Nt$. An example of the update y_UD of the second variable set (step S120) is described below.

For example, the following first formula is calculated in the update x_UD of the first variable set (step S110).

$$x_i \mathrel{+}= dt^* y_i \quad \ldots(1)$$

In the first formula, "$dt$" is, for example, a constant. "$dt$" may be predetermined. The first formula indicates that the variable at the left side before the "+" is updated by adding the right side to the variable. This is similar for similar formulas illustrated below as well. The "asterisk (*)" is the multiplication symbol.

After step S110, the flow proceeds to step S155 via steps S141, S142, and S130 described above. The following second formula is performed in step S155.

$$nt += 1 \quad ...(2)$$

In other words, the iteration count $nt$ is increased by 1. When the iteration count $nt$ is less than the determined value $Nt$ in step S152, the flow returns to step S151. The calculation ends when the iteration count $nt$ reaches the determined value $Nt$.

The processor 70 is configured to output at least the first variable $x_i$ obtained after repeating the update processing and at least one function of the first variable $x_i$ obtained after repeating the update processing (step S160).

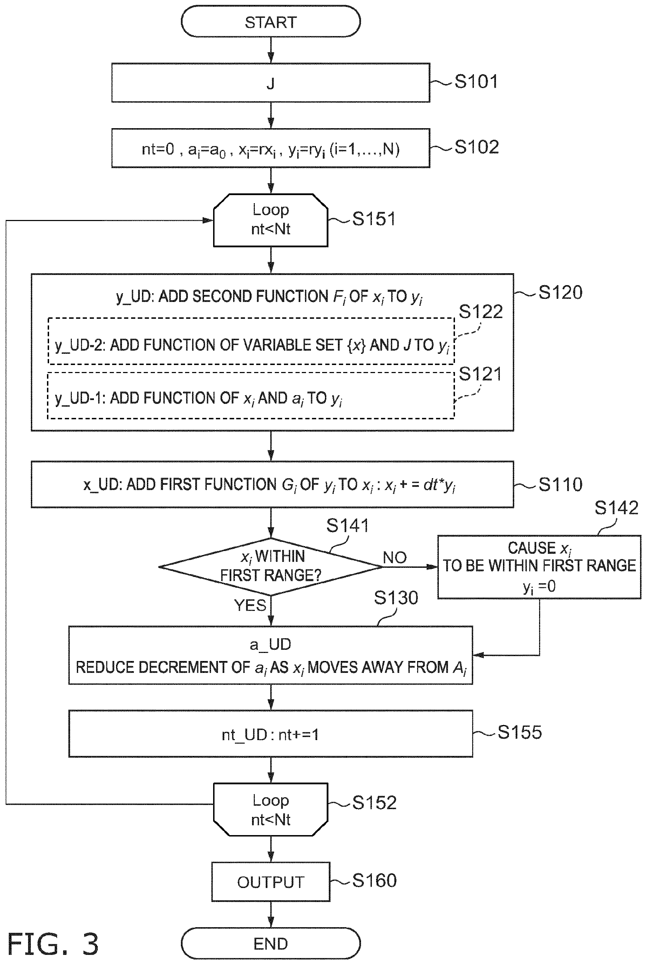

FIG. 3 is a flowchart illustrating an operation of the calculating device according to the embodiment.

FIG. 3 shows the second example described above. As shown in FIG. 3, the update a_UD of the parameter $a_i$ is performed in step S130. In the second example, when referenced to the initial parameter $a_i$, the parameter $a_i$ is reduced after the loop of the update processing (at the end of the calculation). In step S130 (the update a_UD of the parameter $a_i$) of the second example, the decrement of the parameter $a_i$ is set to decrease as the first variable $x_i$ moves away from the first value $A_i$. Other than such a step S130, the processing illustrated in FIG. 3 may be similar to the processing illustrated in FIG. 2.

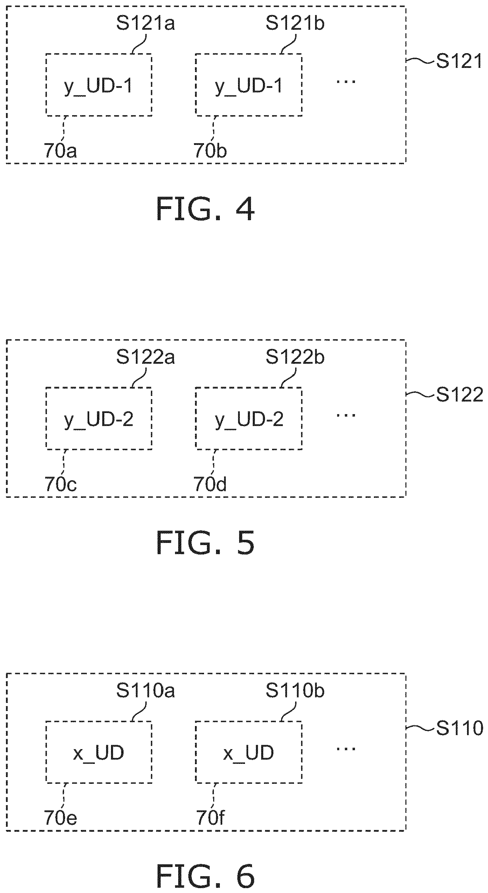

FIG. 4 is a schematic view illustrating a part of the calculating device according to the embodiment.

As shown in FIG. 4, the processor 70 may include the first processing part 70a and the second processing part 70b. The first processing part 70a and the second processing part 70b perform the update y_UD-1 based on the first-term function (step S121). For example, the first processing part 70a performs a part of the calculation related to the first-term function (step S121a). The second processing part 70b performs another part of the calculation related to the first-term function (step S121b). At least a portion of the other part of the calculation related to the first-term function may be simultaneously performed with at least a portion of the part of the calculation related to the first-term function. Parallel computation speeds up the calculation.

FIG. 5 is a schematic view illustrating a part of the calculating device according to the embodiment.

As shown in FIG. 5, the processor 70 may include the third processing part 70c and the fourth processing part 70d. The third processing part 70c and the fourth processing part 70d perform the update y_UD-2 based on the second-term function (step S122). For example, the third processing part 70c performs a part of the calculation related to the second-term function (step S122a). The fourth processing part 70d performs another part of the calculation related to the second-term function (step S122b). At least a portion of the other part of the calculation related to the second-term function may be simultaneously performed with at least a portion of the part of the calculation related to the second-term function. Parallel computation speeds up the calculation.

FIG. 6 is a schematic view illustrating a part of the calculating device according to the embodiment.

As shown in FIG. 6, the processor 70 may include the fifth processing part 70e and the sixth processing part 70f. The fifth processing part 70e and the sixth processing part 70f perform the update x_UD of the first variable set (step S110). For example, the fifth processing part 70e performs a part of the update x_UD of the first variable set (step S110a). The sixth processing part 70f performs another part of the update x_UD of the first variable set (step S110b). At least a portion of the other part of the update x_UD of the first variable set is simultaneously performed with at least a portion of the part of the update x_UD of the first variable set.

For example, the fifth processing part 70e performs a part of the calculation related to the first function $G_i$ (step S110a). The sixth processing part 70f performs another part of the calculation related to the first function $G_i$ (step S110b). At least a portion of the other part of the calculation related to the first function $G_i$ is simultaneously performed with at least a portion of the part of the calculation related to the first function $G_i$.

Thus, the parallel processing (the parallel computation) for the ordinal number $i$ may be performed in at least one of the update y_UD-1 based on the first-term function, the update y_UD-2 based on the second-term function, or the update x_UD of the first variable set. For example, the calculations related to mutually-different ordinal numbers $i$ are performed in parallel. The optimization problem can be quickly calculated by parallel processing. For example, a large-scale problem can be quickly solved. For example, the values of the signs (-1 or 1) of the first variable $x_i$ give the solution of the combinatorial optimization problem corresponding to the first parameter set {J}.

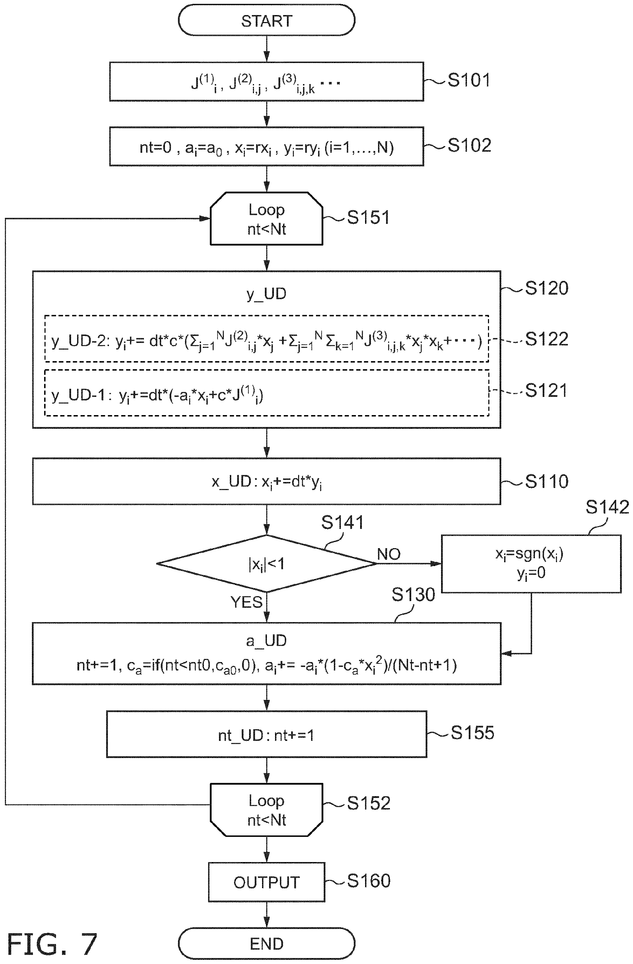

FIG. 7 is a flowchart illustrating an operation of the calculating device according to the embodiment.

FIG. 7 shows one example related to the second example described above. In the example of FIG. 7, the problem data J (the first parameter set {J}) may include first-, second-, third-, and higher-order tensors.

In the example of FIG. 7, the following third formula is calculated in the update y_UD-2 based on the second-term function.

$$y_i += dt^*c^*(\Sigma_{j=1}{}^N J^{(2)}{}_{i,j}{}^*x_j + \Sigma_{j=1}{}^N \Sigma_{k=1}{}^N J^{(3)}{}_{i,j,k}{}^*x_j{}^*x_k + \cdots) \quad ...(3)$$

As illustrated in the third formula, the first parameter set {$J$} includes first-, second-, third-, and higher-order tensors. The second-term function includes a multiply-add operation term of at least a part of the first parameter set {J} and at least a part of the first variable set {x}. When the first parameter set {J} is second-order, the first parameter set {J} corresponds to a matrix. Thus, the first parameter set {J} may include third- or higher-order tensors. In the third formula, "c" is a parameter. For example, "c" may be calculated between steps S151 and S120. Examples of "c" are described below.

The following fourth formula is calculated in the update y_UD-1 based on the first-term function.

$$y_i += dt^*(-a_i{}^*x_i + c^*J^{(1)}{}_i) \quad ...(4)$$

Namely, the first-term function that is included in the second function $F_i$ includes the product of the first variable $x_i$ and the parameter $a_i$.

The following fifth formula is determined in step S141 in the example of FIG. 7.

$$|x_i| < 1 \quad ...(5)$$

When the fifth formula is satisfied in step S141, the flow proceeds to step S130. When the fifth formula is not satisfied in step S141, the flow proceeds to step S142. The following sixth formula is performed in step S142.

$$x_i = sgn(x_i),$$
$$y_i = 0 \quad ...(6)$$

In the sixth formula, "$sgn(x_i)$" represents the value of the sign (-1 or 1) of the first variable $x_i$. The "processing" of the sixth formula and various subsequent formulas may be represented using a programming language.

In the example of FIG. 7, the following seventh formula is calculated in step S130.

$$nt += 1,$$
$$c_a = if(nt < nt0, c_{a0}, 0), \quad ...(7)$$
$$a_i += -a_i{}^*(1 - c_a{}^*x_i{}^2)/(Nt - nt + 1)$$

In the seventh formula, "$c_a$", "$c_{a0}$", and "$nt0$" are parameters. "$c_a$", "$c_{a0}$", and "$nt0$" may be predetermined. A function that is defined in the following eighth formula is applied to the seventh formula.

$$if(A, a, b) \quad ...(8)$$

When "A" is true, the value of the function of the eighth formula is "a" of the eighth formula. When "A" is false, the value of the function of the eighth formula is "b" of the eighth formula. The update a_UD of the parameter $a_i$ is performed based on the seventh formula above.

In the example of FIG. 7, the following ninth formula may be calculated in step S122.

$$y_i += dt^*c^*(\Sigma_{j=1}{}^N J^{(2)}{}_{i,j}{}^*s_j + \Sigma_{j=1}{}^N \Sigma_{k=1}{}^N J^{(3)}{}_{i,j,k}{}^*s_j{}^*s_k + \cdots) \quad ...(9)$$

In the ninth formula, "$s_j$" in the second term inside the parentheses on the right side is represented by the following tenth formula.

$$s_j = sgn(x_j) \quad ...(10)$$

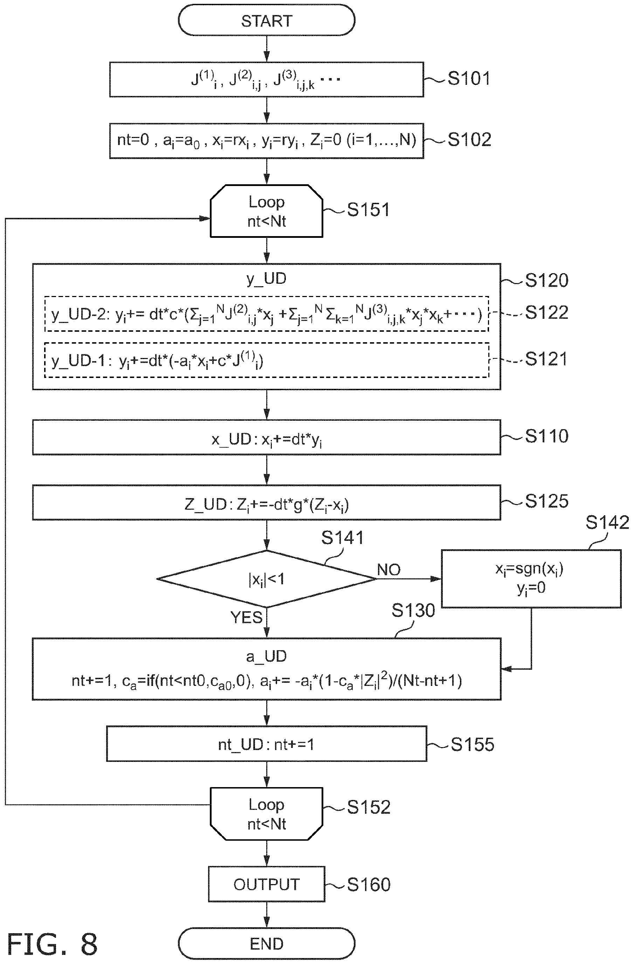

FIG. 8 is a flowchart illustrating an operation of the calculating device according to the embodiment.

In the example of FIG. 8, the parameter $a_i$ is updated based on an average (e.g., a temporal average) of the first variable $x_i$.

As shown in FIG. 8, the following eleventh formula is calculated after step S110 (step S125).

$$Z_i += -dt*g*(Z_i-x_i) \quad ...(11)$$

In the eleventh formula, "g" is a constant. "g" may be predetermined. "$Z_i$" of the eleventh formula corresponds to the temporal average of the first variable $x_i$. In the example as shown in FIG. 8, "$Z_i$" is set to 0 in the initialization (step S102). Then, steps S141 and S142 described with reference to FIG. 7 are performed.

In the example of FIG. 8, the following twelfth formula is calculated in step S130.

$$nt += 1,$$
$$c_a = if(nt < nt0, c_{a0}, 0), \quad ...(12)$$
$$a_i += -a_i*(1-c_a*|Z_i|^2)/(Nt-nt+1)$$

Then, steps S155, S152, and S160 described with reference to FIG. 7 are performed. Thus, according to the embodiment, the parameter $a_i$ may be updated based on the variable "$Z_i$".

For example, in a third example, the processor 70 performs the update processing K times. The parameter $a_i$ of the Kth update processing is greater than the parameter $a_i$ of the first update processing. Each loop of the update processing includes the first update and the second update performed after the first update. The increment of the parameter $a_i$ of the second update referenced to the parameter $a_i$ of the first update is set to decrease as the absolute value of the difference between a variable $Z_i$ and the first value $A_i$ increases for two ordinal numbers $i$. The variable $Z_i$ changes dependently on the first variable $x_i$.

For example, in the third example, the absolute value of the difference between the variable $Z_p$ and the first value $A_p$ is greater than the absolute value of the difference between the variable $Z_q$ and the first value $A_q$. In such a case, the increment of the parameter $a_p$ of the second update referenced to the parameter $a_p$ of the first update is set to be less than the increment of the parameter $a_q$ of the second update referenced to the parameter $a_q$ of the first update. The variable $Z_p$ changes dependently on the first variable $x_p$. The variable $Z_q$ changes dependently on the first variable $x_q$.

For example, in a fourth example, the processor 70 performs the update processing K times. The parameter $a_i$ of the Kth update processing is less than the parameter $a_i$ of the first update processing. Each loop of the update processing includes the first update and the second update performed after the first update. The decrement of the parameter $a_i$ of the second update referenced to the parameter $a_i$ of the first update is set to decrease as the absolute value of the difference between the variable $Z_i$ and the first value $A_i$ increases for two ordinal numbers $i$. The variable $Z_i$ changes dependently on the first variable $x_i$.

For example, in the fourth example, the absolute value of the difference between the variable $Z_p$ and the first value $A_p$ is greater than the absolute value of the difference between the variable $Z_q$ and the first value $A_q$. In such a case, the decrement of the parameter $a_p$ of the second update referenced to the parameter $a_p$ of the first update is set to be less than the decrement of the parameter $a_q$ of the second update referenced to the parameter $a_q$ of the first update. The variable $Z_p$ changes dependently on the first variable $x_p$. The variable $Z_q$ changes dependently on the first variable $x_q$.

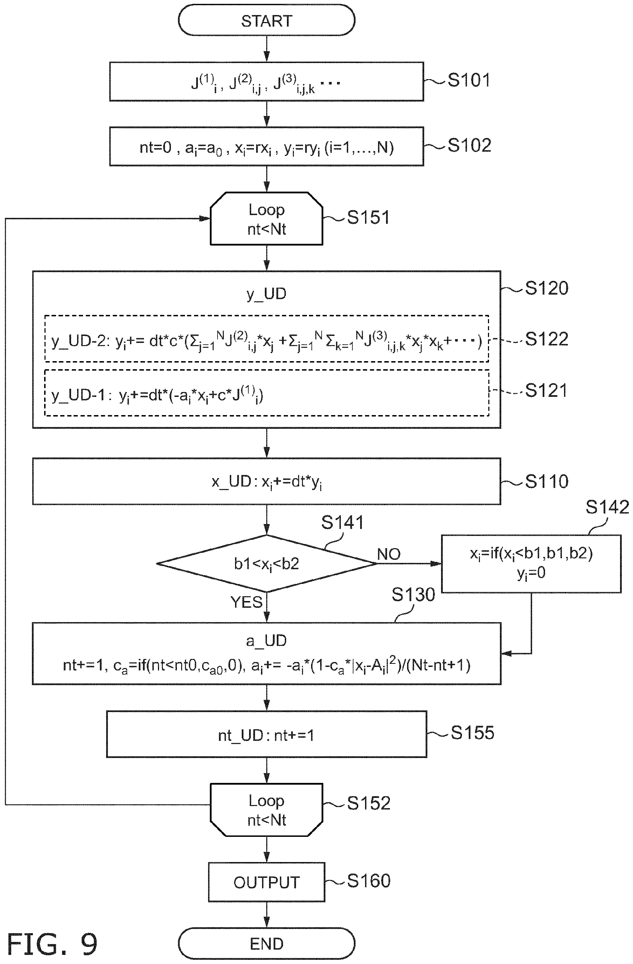

FIG. 9 is a flowchart illustrating an operation of the calculating device according to the embodiment.

In the example of FIG. 9, the parameter $a_i$ is updated based on the distance to the first variable $x_i$ from the first value $A_i$.

In FIG. 9, the following thirteenth formula is determined in step S141.

$$b1 < x_i < b2 \quad ...(13)$$

In the thirteenth formula, "bl" corresponds to the first boundary value. "b2" corresponds to the second boundary value.

In FIG. 9, the following fourteenth formula is calculated in step S142.

$$x_i = if(x_i < b1, b1, b2),$$
$$y_i = 0 \qquad \ldots(14)$$

In FIG. 9, the following fifteenth formula is calculated in step S130.

$$nt += 1,$$
$$c_a = if(nt < nt0, c_{a0}, 0), \qquad \ldots(15)$$
$$a_i += -a_i * (1 - c_a * |x_i - A_i|^2)/(Nt - nt + 1)$$

For example, in the fifteenth formula, "$A_i$" may be represented by the following sixteenth formula.

$$A_i = (b1 + b2)/2 \qquad \ldots(16)$$

In the example as shown in the sixteenth formula, the first value $A_i$ (e.g., the first value $A_p$ and the first value $A_q$) is the median value of the first boundary value ($b1$) and the second boundary value (b2).

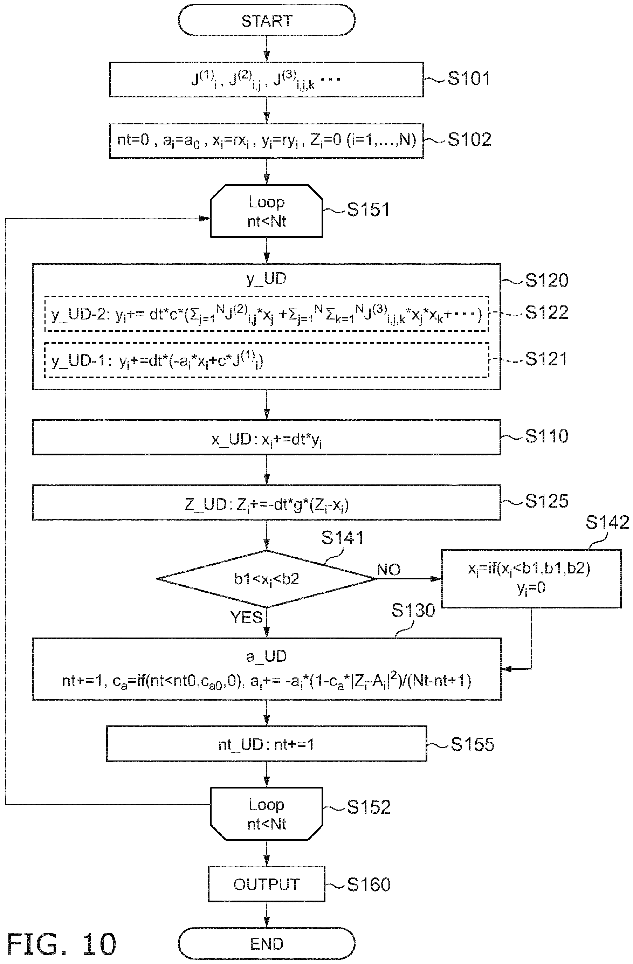

FIG. 10 is a flowchart illustrating an operation of the calculating device according to the embodiment.
In the example of FIG. 10, the parameter $a_i$ is updated based on the distance from the first value $A_i$ and the temporal average of the first variable $x_i$.
In FIG. 10, the following seventeenth formula is calculated in step S130.

$$nt += 1,$$
$$c_a = if(nt < nt0, c_{a0}, 0), \qquad \ldots(17)$$
$$a_i += -a_i * (1 - c_a * |Z_i - A_i|^2)/(Nt - nt + 1)$$

According to the embodiment, various modifications of the update a_UD of the parameter $a_i$ are possible.
According to the embodiment, an update that uses a random number may be performed. For example, the following eighteenth formula is calculated in the update y_UD-1 based on the first-term function (step S121).

$$y_i += dt * (-r_i * a_i * x_i + c * J^{(1)}_i) \qquad \ldots(18)$$

For example, the eighteenth formula is calculated instead of the fourth formula.
For example, the second function $F_i$ includes the first-term function. The first-term function includes the product of the first variable $x_i$, the parameter $a_i$, and the random number $r_i$. The random number $r_i$ is positive. The random number $r_i$ for one ordinal number $i$ is different from the random number $r_i$, for another ordinal number $i$. For example, the random number $r_p$ that is related to the ordinal number p is different from the random number $r_q$ related to the ordinal number q. Such random numbers (noise terms) make it easier to separate the first variable $x_i$ from the "walls" (the boundaries of the first range).
For example, the parameter "c" is obtained by the following nineteenth formula.

$$c = \sqrt{\frac{N}{\sum_{i=1}^{N} |z_i|^2}} \qquad \ldots(19)$$

$$z_i = J_i^{(1)} + \sum_{j=1}^{N} J_{i,j}^{(2)} x_j + \sum_{j=1}^{N} \sum_{k=1}^{N} J_{i,j,k}^{(3)} x_j x_k + \cdots$$

or

$$z_i = J_i^{(1)} + \sum_{j=1}^{N} J_{i,j}^{(2)} s_j + \sum_{j=1}^{N} \sum_{k=1}^{N} J_{i,j,k}^{(3)} s_j s_k + \cdots$$

The formulas above (e.g., the third formula, the fourth formula, etc.) are calculated using "c" obtained by the nineteenth formula.

Calculation examples will now be described.

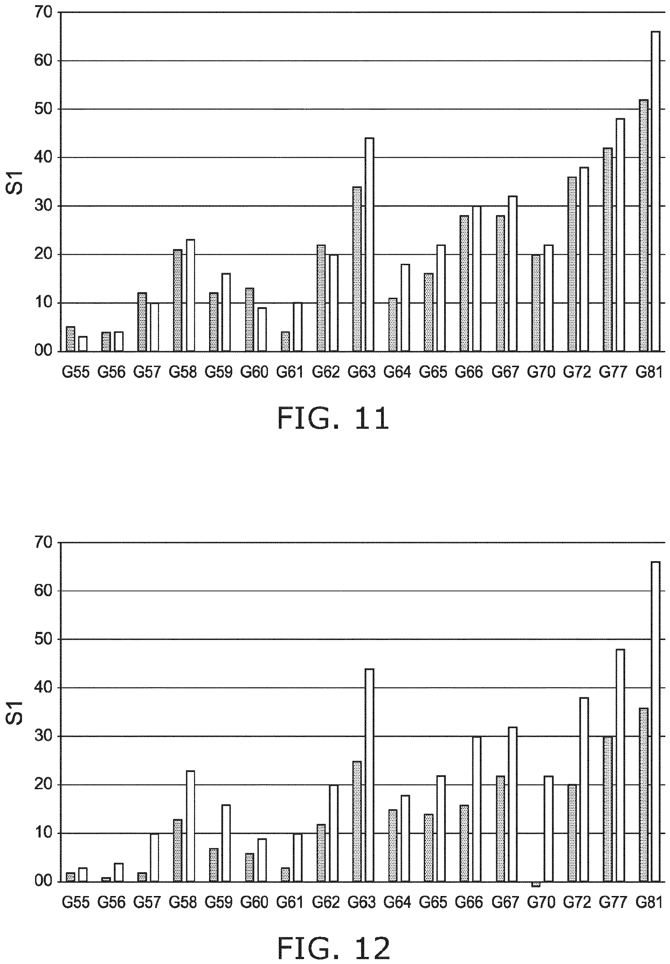

FIG. 11 is a graph illustrating calculation results of calculating devices.

In FIG. 11, the calculation result of the calculating device 110 according to the embodiment at a first calculation condition is shown by the dark bars. In FIG. 11, the calculation result of a calculating device according to a reference example is shown by the light bars. At the first calculation condition, different parameters $a_i$ are applied for different ordinal numbers $i$ as described above, and the parameter $a_i$ is updated (modified) each loop of the update processing. In the calculating device of the reference example, the parameter $a_i$ is the same for all in ordinal number $i$; and the parameter $a_i$ is the same in each loop of the update processing. In the reference example, "$c_a$" is 0. For the first calculation condition and the reference example, "$r_i$" is 1.

FIG. 11 shows the calculation results of the "G-set". The "G-set" is a benchmark related to the maximum-cut problem. The horizontal axis of FIG. 11 is the instance name. The vertical axis of FIG. 11 is a precision parameter $S1$. The precision parameter $S1$ that is related to the embodiment corresponds to the difference between the cut value of the calculation result of the "best known values" related to the G-set and the cut value of the calculation result of the first calculation condition. The precision parameter $S1$ that is related to the reference example corresponds to the difference between the cut value of the calculation result of the "best known value" related to the G-set and the cut value of the calculation result of the calculation condition of the reference example. In the example, the "best known values" are described in "H. Goto et al., Science Advances 7, eabe7953 (2021)". A small precision parameter $S1$ means that a solution of higher accuracy is obtained for the same calculation time. A small precision parameter $S1$ corresponds to a fast calculation.

At the first condition illustrated in FIG. 11, the parameter "$c_a$" changes from 1.1 toward 0. As shown in FIG. 11, the calculating device 110 according to the embodiment resulted in a smaller precision parameter $S1$ than the reference example.

FIG. 12 is a graph illustrating calculation results of the calculating devices.

In FIG. 12, the calculation result of the calculating device 110 according to the embodiment at a second calculation condition is shown by the dark bars. In FIG. 12, the calculation result of the calculating device according to the reference example is shown by the light bars. At the second calculation condition, the parameter "$c_a$" changes from 1.1 toward 0; and the random number (the noise term) of the eighteenth formula is applied. In the example, the random number $r_i$, is a random number not less than 0.5 and not more than 1.5. As described above, in the reference example, "$c_a$" is 0, and "$r_i$" is 1.

FIG. 12 shows the calculation result of the above "G-set". The horizontal axis of FIG. 12 is the instance name. The vertical axis of FIG. 12 is the precision parameter $S1$. The precision parameter $S1$ that is related to the embodiment corresponds to the difference between the cut value of the calculation result of the "best known values" related to the G-set and the cut value of the calculation result of the first calculation condition. The precision parameter $S1$ that is related to the reference example corresponds to the difference between the cut value of the calculation result of the "best known value" related to the G-set and the cut value of the calculation result of the calculation condition of the reference example.

As shown in FIG. 12, the calculating device 110 according to the embodiment resulted in a smaller precision parameter $S1$ than the reference example.

Second embodiment

A second embodiment relates to a calculation program. The calculation program causes a computer to repeatedly perform the update processing described above.

Third embodiment

A third embodiment is a computer-readable recording medium. A program that causes a computer to repeatedly perform the update processing described above is recorded in the recording medium.

Fourth embodiment

The embodiment relates to a calculation method. The calculation method causes the processor 70 to repeatedly perform the update processing described above.

For example, the above processing (instructions) of the various information (data) is executed based on a program (software). For example, the above processing of the various information is performed by a computer storing the program and reading the program.

The above processing of the various information may be recorded in a magnetic disk (a flexible disk, a hard disk, etc.), an optical disk (CD-ROM, CD-R, CD-RW, DVD-ROM, DVD±R, DVD±RW, etc.), semiconductor memory, or another recording medium as a program that can cause a computer to perform the execution.

For example, the information that is recorded in the recording medium can be read by a computer (or an embedded system). The recording format (the storage format) of the recording medium is arbitrary. For example, the computer reads the program from the recording medium and causes a CPU to execute the instructions described in the program based on the program. In the computer, the acquisition (or the reading) of the program may be performed via a network.

At least a part of the above processing of the information may be performed by various software operating on a computer (or an embedded system) based on a program installed in the computer from a recording medium. The software includes, for example, an OS (operating system), etc. The software may include, for example, middleware operating on a network, etc.

The recording medium according to embodiments also includes a recording medium to which a program obtained using a LAN, the Internet, or the like is downloaded and stored. The above processing may be performed based on multiple recording media.

The computer according to embodiments includes one or multiple devices (e.g., personal computers, etc.). The computer according to embodiments may include multiple devices connected by a network.

Embodiments may include the following configurations (e.g., technological proposals).

Configuration 1

A calculating device, comprising:

a processor configured to perform repeating an update processing,
the update processing including an update of a first variable set and an update of a second variable set,
the first variable set including a first variable $x_i$ (the ordinal number $i$ being an integer of 1 to N, and N being one integer not less than 2),
the second variable set including a second variable $y_i$,
the update of the second variable set including updating the second variable $y_i$, by adding a second function $F_i$ to the second variable $y_i$ before the update,
the second function $F_i$ including the first variable $x_i$ as a variable,
the second function $F_i$ including a parameter $a_i$,
an ordinal number p being one integer not less than 1 and not more than $N$,
an ordinal number q being one integer not less than 1 and not more than $N$,
the ordinal number q being different from the ordinal number p,
a parameter $a_p$ being different from a parameter $a_q$.

Configuration 2

The calculating device according to Configuration 1, wherein

the repeating of the update processing includes:

a first update; and
a second update performed after the first update, and

the parameter $a_p$ of the first update is different from the parameter $a_p$ of the second update.

Configuration 3

The calculating device according to Configuration 2, wherein

the processor performs the update processing K times (K being an integer not less than 2),
the parameter $a_i$ of the Kth update processing is greater than the parameter $a_i$ of the first update processing,
an absolute value of a difference between the first variable $x_p$ and a first value $A_p$ is greater than an absolute value of a difference between the first variable $x_q$ and a first value $A_q$, and
an increment of the parameter $a_p$ of the second update referenced to the parameter $a_p$ of the first update is less than an increment of the parameter $a_q$ of the second update referenced to the parameter $a_q$ of the first update.

Configuration 4

The calculating device according to Configuration 2, wherein

the processor performs the update processing K times (K being an integer not less than 2),
the parameter $a_i$ of the Kth update processing is less than the parameter $a_i$ of the first update processing,
an absolute value of a difference between the first variable $x_p$ and a first value $A_p$ is greater than an absolute value of a difference between the first variable $x_q$ and a first value $A_q$, and
a decrement of the parameter $a_p$ of the second update referenced to the parameter $a_p$ of the first update is less than a decrement of the parameter $a_q$ of the second update referenced to the parameter $a_q$ of the first update.

Configuration 5

The calculating device according to Configuration 2, wherein

the processor performs the update processing K times (K being an integer not less than 2),
the parameter $a_i$ of the Kth update processing is greater than the parameter $a_i$ of the first update processing,
an absolute value of a difference between a variable $Z_p$ and a first value $A_p$ is greater than an absolute value of a difference between a variable $Z_q$ and a first value $A_q$,
an increment of the parameter $a_p$ of the second update referenced to the parameter $a_p$ of the first update is less than an increment of the parameter $a_q$ of the second update referenced to the parameter $a_q$ of the first update,
the variable $Z_p$ changes dependently on the first variable $x_p$, and
the variable $Z_q$ changes dependently on the first variable $xq$.

Configuration 6

The calculating device according to Configuration 2, wherein

the processor performs the update processing K times (K being an integer not less than 2),
the parameter $a_i$ of the Kth update processing is less than the parameter $a_i$ of the first update processing,
an absolute value of a difference between a variable $Z_p$ and a first value $A_p$ is greater than an absolute value of a difference between a variable $Z_q$ and a first value $A_q$,
a decrement of the parameter $a_p$ of the second update referenced to the parameter $a_p$ of the first update is less than a decrement of the parameter $a_q$ of the second update referenced to the parameter $a_q$ of the first update,
the variable $Z_p$ changes dependently on the first variable $x_p$, and
the variable $Z_q$ changes dependently on the first variable $xq$.

Configuration 7

The calculating device according to any one of Configurations 3 to 6, wherein

the processor controls the first variable $x_i$ in a first range,
the first range is not less than a first boundary value and not more than a second boundary value, and
the first value $A_p$ and the first value $A_q$ are not less than the first boundary value and not more than the second boundary value.

Configuration 8

The calculating device according to any one of Configurations 3 to 6, wherein

the processor controls the first variable $x_i$ to be not less than a first boundary value and not more than a second boundary value, and
the first value $A_p$ and the first value $A_q$ are substantially median values of the first and second boundary values.

Configuration 9

The calculating device according to any one of Configurations 3 to 8, wherein

the second function $F_i$ includes a first-term function, and
the first-term function includes a product of the first variable $x_i$ and the parameter $a_i$.

Configuration 10

The calculating device according to any one of Configurations 1 to 9, wherein

the second function $F_i$ includes a first-term function,
the first-term function includes a product of the first variable $x_i$, the parameter $a_i$, and a random number $r_i$,
the random number $r_i$, is positive, and
a random number $r_p$ related to the ordinal number p is different from a random number $r_q$ related to the ordinal number q.

Configuration 11

The calculating device according to Configuration 9 or 10, wherein

the second function $F_i$ includes the first-term function and a second-term function, and
the second-term function includes the first variable set and a first parameter set {J} as variables.

Configuration 12

The calculating device according to Configuration 11, wherein
the second-term function includes a multiply-add operation term of at least a part of the first parameter set {J} and at least a part of the first variable set.

Configuration 13

The calculating device according to Configuration 11 or 12, wherein
the first parameter set {J} includes third- or higher-order tensors.

Configuration 14

The calculating device according to any one of Configurations 11 to 13, wherein

the processor includes a third processing part and a fourth processing part,
the third processing part performs a part of a calculation related to the second-term function,
the fourth processing part performs an other part of the calculation related to the second-term function, and
at least a portion of the other part of the calculation related to the second-term function is simultaneously performed with at least a portion of the part of the calculation related to the second-term function.

Configuration 15

The calculating device according to any one of Configurations 9 to 14, wherein

the processor includes a first processing part and a second processing part,

the first processing part performs a part of a calculation related to the first-term function,
the second processing part performs an other part of the calculation related to the first-term function, and
at least a portion of the other part of the calculation related to the first-term function is simultaneously performed
with at least a portion of the part of the calculation related to the first-term function.

Configuration 16

The calculating device according to any one of Configurations 1 to 15, wherein

the update of the first variable set includes updating the first variable $x_i$ by adding a first function to the first variable
$x_i$ before the update, and
the first function includes the second variable $y_i$ as a variable.

Configuration 17

The calculating device according to Configuration 16, wherein

the processor includes a fifth processing part and a sixth processing part,
the fifth processing part performs a part of a calculation related to the first function,
the sixth processing part performs an other part of the calculation related to the first function, and
at least a portion of the other part of the calculation related to the first function is simultaneously performed with at
least a portion of the part of the calculation related to the first function.

Configuration 18

The calculating device according to Configuration 16 or 17, wherein

the first function is independent of the first variable set, and
the second function is independent of the second variable set.

Configuration 19

The calculating device according to any one of Configurations 1 to 18, wherein
the processor is configured to output at least the first variable $x_i$ obtained after the repeating of the update processing
and at least one function of the first variable $x_i$ obtained after the repeating of the update processing.

Configuration 20

A calculation program causing a computer to perform repeating an update processing,

the update processing including an update of a first variable set and an update of a second variable set,
the first variable set including a first variable $x_i$ (the ordinal number $i$ being an integer of 1 to N, and N being one
integer not less than 2),
the second variable set including a second variable $y_i$,
the update of the second variable set including updating the second variable $y_i$ by adding a second function $F_i$ to
the second variable $y_i$ before the update,
the second function $F_i$ including the first variable $x_i$ as a variable,
the second function $F_i$ including a parameter $a_i$,
an ordinal number p being one integer not less than 1 and not more than $N$,
an ordinal number q being one integer not less than 1 and not more than $N$,
the ordinal number q being different from the ordinal number p, and
a parameter $a_p$ being different from a parameter $a_q$.

Configuration 21

A recording medium in which a calculation program is recorded,

the recording medium being computer-readable,

13

the calculation program causing a computer to perform repeating an update processing,
the update processing including an update of a first variable set and an update of a second variable set,
the first variable set including a first variable $x_i$ (the ordinal number $i$ being an integer of 1 to N, and N being one integer not less than 2),
the second variable set including a second variable $y_i$,
the update of the second variable set including updating the second variable $y_i$ by adding a second function $F_i$ to the second variable $y_i$ before the update,
the second function $F_i$ including the first variable $x_i$ as a variable,
the second function $F_i$ including a parameter $a_i$,
an ordinal number p being one integer not less than 1 and not more than $N$,
an ordinal number q being one integer not less than 1 and not more than $N$,
the ordinal number q being different from the ordinal number p,
a parameter $a_p$ being different from a parameter $a_q$.

Configuration 22

A calculation method, comprising:

causing a processor to perform repeating an update processing,
the update processing including an update of a first variable set and an update of a second variable set,
the first variable set including a first variable $x_i$ (the ordinal number $i$ being an integer of 1 to N, and N being one integer not less than 2),
the second variable set including a second variable $y_i$,
the update of the second variable set including updating the second variable $y_i$ by adding a second function $F_i$ to the second variable $y_i$ before the update,
the second function $F_i$ including the first variable $x_i$ as a variable,
the second function $F_i$ including a parameter $a_i$,
an ordinal number p being one integer not less than 1 and not more than $N$,
an ordinal number q being one integer not less than 1 and not more than $N$,
the ordinal number q being different from the ordinal number p,
a parameter $a_p$ being different from a parameter $a_q$.

According to embodiments, a calculating device, a calculation program, a recording medium, and a calculation method can be provided in which the calculation accuracy can be increased.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in calculating devices such as processors, acquisition parts, holding parts, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all calculating devices, calculation programs, recording media, and calculation methods practicable by an appropriate design modification by one skilled in the art based on the calculating devices, the calculation programs, the recording media, and the calculation methods as embodiments of the invention also are within the scope of the invention to the extent that the purport of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

**Claims**

1. A calculating device, comprising:

    a processor configured to perform repeating an update processing,
    the update processing including an update of a first variable set and an update of a second variable set,
    the first variable set including a first variable $x_i$ (the ordinal number $i$ being an integer of 1 to N, and N being one integer not less than 2),
    the second variable set including a second variable $y_i$,
    the update of the second variable set including updating the second variable $y_i$ by adding a second function $F_i$ to the second variable $y_i$ before the update,
    the second function $F_i$ including the first variable $x_i$ as a variable,
    the second function $F_i$ including a parameter $a_i$,
    an ordinal number p being one integer not less than 1 and not more than $N$,
    an ordinal number q being one integer not less than 1 and not more than $N$,
    the ordinal number q being different from the ordinal number p,
    a parameter $a_p$ being different from a parameter $a_q$.

2. The device according to claim 1, wherein

    the repeating of the update processing includes:

       a first update; and
       a second update performed after the first update, and

    the parameter $a_p$ of the first update is different from the parameter $a_p$ of the second update.

3. The device according to claim 2, wherein

    the processor performs the update processing K times (K being an integer not less than 2),
    the parameter $a_i$ of the Kth update processing is greater than the parameter $a_i$ of the first update processing,
    an absolute value of a difference between the first variable $x_p$ and a first value $A_p$ is greater than an absolute value of a difference between the first variable $x_q$ and a first value $A_q$, and
    an increment of the parameter $a_p$ of the second update referenced to the parameter $a_p$ of the first update is less than an increment of the parameter $a_q$ of the second update referenced to the parameter $a_q$ of the first update.

4. The device according to claim 2, wherein

    the processor performs the update processing K times (K being an integer not less than 2),
    the parameter $a_i$ of the Kth update processing is less than the parameter $a_i$ of the first update processing,
    an absolute value of a difference between the first variable $x_p$ and a first value $A_p$ is greater than an absolute value of a difference between the first variable $x_q$ and a first value $A_q$, and
    a decrement of the parameter $a_p$ of the second update referenced to the parameter $a_p$ of the first update is less than a decrement of the parameter $a_q$ of the second update referenced to the parameter $a_q$ of the first update.

5. The device according to claim 2, wherein

    the processor performs the update processing K times (K being an integer not less than 2),
    the parameter $a_i$ of the Kth update processing is greater than the parameter $a_i$ of the first update processing,
    an absolute value of a difference between a variable $Z_p$ and a first value $A_p$ is greater than an absolute value of a difference between a variable $Z_q$ and a first value $A_q$,
    an increment of the parameter $a_p$ of the second update referenced to the parameter $a_p$ of the first update is less than an increment of the parameter $a_q$ of the second update referenced to the parameter $a_q$ of the first update,
    the variable $Z_p$ changes dependently on the first variable $x_p$, and
    the variable $Z_q$ changes dependently on the first variable $xq$.

6. The device according to claim 2, wherein

the processor performs the update processing K times (K being an integer not less than 2),
the parameter $a_i$ of the Kth update processing is less than the parameter $a_i$ of the first update processing,
an absolute value of a difference between a variable $Z_p$ and a first value $A_p$ is greater than an absolute value of a difference between a variable $Z_q$ and a first value $A_q$,
a decrement of the parameter $a_p$ of the second update referenced to the parameter $a_p$ of the first update is less than a decrement of the parameter $a_q$ of the second update referenced to the parameter $a_q$ of the first update,
the variable $Z_p$ changes dependently on the first variable $x_p$, and
the variable $Z_q$ changes dependently on the first variable $xq$.

7. The device according to any one of claims 3-6, wherein

the processor controls the first variable $x_i$ in a first range,
the first range is not less than a first boundary value and not more than a second boundary value, and
the first value $A_p$ and the first value $A_q$ are not less than the first boundary value and not more than the second boundary value.

8. The device according to any one of claims 3-6, wherein

the processor controls the first variable $x_i$ to be not less than a first boundary value and not more than a second boundary value, and
the first value $A_p$ and the first value $A_q$ are substantially median values of the first and second boundary values.

9. The device according to any one of claims 3-8, wherein

the second function $F_i$ includes a first-term function, and
the first-term function includes a product of the first variable $x_i$ and the parameter $a_i$.

10. The device according to any one of claims 1-9, wherein

the second function $F_i$ includes a first-term function,
the first-term function includes a product of the first variable $x_i$, the parameter $a_i$, and a random number $r_i$,
the random number $r_i$ is positive, and
a random number $r_p$ related to the ordinal number p is different from a random number $r_q$ related to the ordinal number $q$.

11. The device according to claim 9 or 10, wherein

the second function $F_i$ includes the first-term function and a second-term function, and
the second-term function includes the first variable set and a first parameter set {J} as variables.

12. The device according to claim 11, wherein
the second-term function includes a multiply-add operation term of at least a part of the first parameter set {J} and at least a part of the first variable set.

13. The device according to claim 11 or 12, wherein

the processor includes a third processing part and a fourth processing part,
the third processing part performs a part of a calculation related to the second-term function,
the fourth processing part performs an other part of the calculation related to the second-term function, and
at least a portion of the other part of the calculation related to the second-term function is simultaneously performed with at least a portion of the part of the calculation related to the second-term function.

14. A calculation program causing a computer to perform repeating an update processing,

the update processing including an update of a first variable set and an update of a second variable set,
the first variable set including a first variable $x_i$ (the ordinal number $i$ being an integer of 1 to N, and N being one integer not less than 2),
the second variable set including a second variable $y_i$,

the update of the second variable set including updating the second variable $y_i$ by adding a second function $F_i$ to the second variable $y_i$ before the update,
the second function $F_i$ including the first variable $x_i$ as a variable,
the second function $F_i$ including a parameter $a_i$,
an ordinal number p being one integer not less than 1 and not more than $N$,
an ordinal number q being one integer not less than 1 and not more than $N$,
the ordinal number q being different from the ordinal number p, and
a parameter $a_p$ being different from a parameter $a_q$.

15. A calculation method, comprising:

causing a processor to perform repeating an update processing,
the update processing including an update of a first variable set and an update of a second variable set,
the first variable set including a first variable $x_i$ (the ordinal number $i$ being an integer of 1 to N, and N being one integer not less than 2),
the second variable set including a second variable $y_i$,
the update of the second variable set including updating the second variable $y_i$ by adding a second function $F_i$ to the second variable $y_i$ before the update,
the second function $F_i$ including the first variable $x_i$ as a variable,
the second function $F_i$ including a parameter $a_i$,
an ordinal number p being one integer not less than 1 and not more than $N$,
an ordinal number q being one integer not less than 1 and not more than $N$,
the ordinal number q being different from the ordinal number p,
a parameter $a_p$ being different from a parameter $a_q$.

FIG. 1

START

J ⎯ S101

$nt = 0$ , $a_i = a_0$ , $x_i = rx_i$ , $y_i = ry_i$ $(i=1,...,N)$ ⎯ S102

Loop
$nt < Nt$ ⎯ S151

y_UD: ADD SECOND FUNCTION $F_i$ OF $x_i$ TO $y_i$ ⎯ S120

y_UD-2: ADD FUNCTION OF VARIABLE SET $\{x\}$ AND $J$ TO $y_i$ ⎯ S122

y_UD-1: ADD FUNCTION OF $x_i$ AND $a_i$ TO $y_i$ ⎯ S121

x_UD: ADD FIRST FUNCTION $G_i$ OF $y_i$ TO $x_i$ : $x_i += dt*y_i$ ⎯ S110

S141

$x_i$ WITHIN FIRST RANGE? ⎯ NO ⟶ CAUSE $x_i$ TO BE WITHIN FIRST RANGE $y_i = 0$ ⎯ S142

YES

a_UD
REDUCE INCREMENT OF $a_i$ AS $x_i$ MOVES AWAY FROM $A_i$ ⎯ S130

nt_UD : $nt += 1$ ⎯ S155

Loop
$nt < Nt$ ⎯ S152

OUTPUT ⎯ S160

END

FIG. 2

START

J ~S101

$nt=0$ , $a_i=a_0$ , $x_i=rx_i$ , $y_i=ry_i$ $(i=1,...,N)$ ~S102

Loop
$nt<Nt$ ~S151

y_UD: ADD SECOND FUNCTION $F_i$ OF $x_i$ TO $y_i$ ~S120

y_UD-2: ADD FUNCTION OF VARIABLE SET $\{x\}$ AND $J$ TO $y_i$ ~S122

y_UD-1: ADD FUNCTION OF $x_i$ AND $a_i$ TO $y_i$ ~S121

x_UD: ADD FIRST FUNCTION $G_i$ OF $y_i$ TO $x_i$ : $x_i$ += $dt^*y_i$ ~S110

S141

$x_i$ WITHIN FIRST RANGE? — NO → CAUSE $x_i$ TO BE WITHIN FIRST RANGE $y_i=0$ ~S142

YES

a_UD
REDUCE DECREMENT OF $a_i$ AS $x_i$ MOVES AWAY FROM $A_i$ ~S130

nt_UD : $nt+=1$ ~S155

Loop
$nt<Nt$ ~S152

OUTPUT ~S160

END

FIG. 3

S121a    S121b

S121

y_UD-1    y_UD-1    ...

70a    70b

## FIG. 4

S122a    S122b

S122

y_UD-2    y_UD-2    ...

70c    70d

## FIG. 5

S110a    S110b

S110

x_UD    x_UD    ...

70e    70f

## FIG. 6

START

$J^{(1)}_i$ , $J^{(2)}_{i,j}$ , $J^{(3)}_{i,j,k}$ $\cdots$ — S101

$nt=0$ , $a_i=a_0$ , $x_i=rx_i$ , $y_i=ry_i$ $(i=1,\ldots,N)$ — S102

Loop
$nt<Nt$ — S151

y_UD — S120

y_UD-2: $y_i += dt*c*(\Sigma_{j=1}^N J^{(2)}_{i,j}*x_j + \Sigma_{j=1}^N \Sigma_{k=1}^N J^{(3)}_{i,j,k}*x_j*x_k+\cdots)$ — S122

y_UD-1 : $y_i += dt*(-a_i*x_i+c*J^{(1)}_i)$ — S121

x_UD : $x_i += dt*y_i$ — S110

S141
$|x_i|<1$ — NO → S142
$x_i=sgn(x_i)$
$y_i=0$

YES

S130
a_UD
$nt += 1$, $c_a=if(nt<nt0,c_{a0},0)$, $a_i += -a_i*(1-c_a*x_i^2)/(Nt-nt+1)$

nt_UD : $nt += 1$ — S155

Loop
$nt<Nt$ — S152

OUTPUT — S160

END

FIG. 7

START

$J^{(1)}_i$ , $J^{(2)}_{i,j}$ , $J^{(3)}_{i,j,k}$ $\cdots$ — S101

$nt=0$ , $a_i=a_0$ , $x_i=rx_i$ , $y_i=ry_i$ , $Z_i=0$ (i=1,...,N) — S102

Loop
nt<Nt — S151

y_UD — S120

y_UD-2: $y_i += dt*c*(\Sigma_{j=1}^N J^{(2)}_{i,j}*x_j + \Sigma_{j=1}^N \Sigma_{k=1}^N J^{(3)}_{i,j,k}*x_j*x_k + \cdots)$ — S122

y_UD-1 : $y_i += dt*(-a_i*x_i + c*J^{(1)}_i)$ — S121

x_UD : $x_i += dt*y_i$ — S110

Z_UD : $Z_i += -dt*g*(Z_i-x_i)$ — S125

S141 $|x_i|<1$

NO → S142 $x_i=sgn(x_i)$ $y_i=0$

YES

S130
a_UD
$nt+=1$, $c_a=if(nt<nt0, c_{a0}, 0)$, $a_i += -a_i*(1-c_a*|Z_i|^2)/(Nt-nt+1)$

nt_UD : $nt+=1$ — S155

Loop
nt<Nt — S152

OUTPUT — S160

END

FIG. 8

FIG. 9

START

$J^{(1)}_i$ , $J^{(2)}_{i,j}$ , $J^{(3)}_{i,j,k}$ $\cdots$  $\sim$ S101

$nt=0$ , $a_i=a_0$ , $x_i=rx_i$ , $y_i=ry_i$ $(i=1,...,N)$  $\sim$ S102

Loop $nt<Nt$  $\sim$ S151

y_UD  $\sim$ S120

y_UD-2: $y_i += dt*c*(\Sigma_{j=1}^{N} J^{(2)}_{i,j}*x_j + \Sigma_{j=1}^{N}\Sigma_{k=1}^{N} J^{(3)}_{i,j,k}*x_j*x_k+\cdots)$  $\sim$ S122

y_UD-1: $y_i += dt*(-a_i*x_i+c*J^{(1)}_i)$  $\sim$ S121

x_UD: $x_i += dt*y_i$  $\sim$ S110

S141   $b1<x_i<b2$   NO   $\rightarrow$   S142   $x_i=if(x_i<b1,b1,b2)$ $y_i=0$

YES

S130

a_UD
$nt += 1$, $c_a=if(nt<nt0,c_{a0},0)$, $a_i += -a_i*(1-c_a*|x_i-A_i|^2)/(Nt-nt+1)$

nt_UD: $nt += 1$  $\sim$ S155

Loop $nt<Nt$  $\sim$ S152

OUTPUT  $\sim$ S160

END

START

$J^{(1)}_i$ , $J^{(2)}_{i,j}$ , $J^{(3)}_{i,j,k}$ $\cdots$ ~S101

nt=0 , $a_i$=$a_0$ , $x_i$=$rx_i$ , $y_i$=$ry_i$ , $Z_i$=0 (i=1,...,N) ~S102

Loop
nt<Nt ~S151

y_UD ~S120

y_UD-2: $y_i$ += $dt*c*(\Sigma_{j=1}^N J^{(2)}_{i,j}*x_j + \Sigma_{j=1}^N \Sigma_{k=1}^N J^{(3)}_{i,j,k}*x_j*x_k+\cdots)$ ~S122

y_UD-1 : $y_i$ += $dt*(-a_i*x_i+c*J^{(1)}_i)$ ~S121

x_UD : $x_i$ += $dt*y_i$ ~S110

Z_UD : $Z_i$ += $-dt*g*(Z_i-x_i)$ ~S125

S141
b1<$x_i$<b2 — NO → S142 : $x_i$=if($x_i$<b1,b1,b2)
$y_i$=0

YES

S130
a_UD
nt+=1, $c_a$=if(nt<nt0,$c_{a0}$,0), $a_i$ += $-a_i*(1-c_a*|Z_i-A_i|^2)/(Nt-nt+1)$

nt_UD : nt+=1 ~S155

Loop
nt<Nt ~S152

OUTPUT ~S160

END

# FIG. 10

FIG. 11

FIG. 12

Europäisches
Patentamt

European
Patent Office

Office européen
des brevets

**EUROPEAN SEARCH REPORT**

Application Number

EP 22 19 2465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/266212 A1 (GOTO HAYATO [JP] ET AL) 29 August 2019 (2019-08-29) * paragraph [0017] * ----- | 1-15 | INV. G06F17/16 |

TECHNICAL FIELDS
SEARCHED      (IPC)

G06F

The present search report has been drawn up for all claims

| Place of search | Date of completion of the search | Examiner |
|---|---|---|
| The Hague | 26 April 2023 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                            

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 2465

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2023

| Patent document cited in search report | | Publication date | Patent family member(s) | | Publication date |
|---|---|---|---|---|---|
| US 2019266212 | A1 | 29-08-2019 | JP | 6836529 B2 | 03-03-2021 |
| | | | JP | 2019145010 A | 29-08-2019 |
| | | | US | 2019266212 A1 | 29-08-2019 |
| | | | US | 2021056160 A1 | 25-02-2021 |
| | | | US | 2023025361 A1 | 26-01-2023 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. GOTO et al.** *Science Advances,* 2021, vol. 7, eabe7953